Europäisches Patentamt

European Patent Office

Office européen des brevets

(19)

(11) **EP 0 822 920 B1**

(12) **EUROPÄISCHE PATENTSCHRIFT**

(45) Veröffentlichungstag und Bekanntmachung des Hinweises auf die Patenterteilung:
**04.10.2001 Patentblatt 2001/40**

(51) Int Cl.[7]: **C01B 11/02**, C02F 1/76, C02F 1/72

(21) Anmeldenummer: **96914838.6**

(22) Anmeldetag: **24.04.1996**

(86) Internationale Anmeldenummer:
**PCT/DE96/00772**

(87) Internationale Veröffentlichungsnummer:
**WO 96/33947 (31.10.1996 Gazette 1996/48)**

(54) **VERFAHREN ZUR HERSTELLUNG EINER CHLORDIOXID ENTHALTENDEN DESINFEKTIONSLÖSUNG ZUR WASSERAUFBEREITUNG**

PROCESS FOR PRODUCING A CHLORINE DIOXIDE-CONTAINING DISINFECTANT SOLUTION FOR WATER TREATMENT

PROCEDE DE PREPARATION D'UNE SOLUTION DESINFECTANTE RENFERMANT DU DIOXYDE DE CHLORE POUR LE TRAITEMENT DE L'EAU

(84) Benannte Vertragsstaaten:
**AT BE CH DE DK ES FI FR GB GR IE IT LI LU NL PT SE**

(30) Priorität: **25.04.1995 DE 19514612**

(43) Veröffentlichungstag der Anmeldung:
**11.02.1998 Patentblatt 1998/07**

(73) Patentinhaber: **Küke, Fritz**
**30627 Hannover (DE)**

(72) Erfinder: **Küke, Fritz**
**30627 Hannover (DE)**

(74) Vertreter: **Eisenführ, Speiser & Partner**
**Martinistrasse 24**
**28195 Bremen (DE)**

(56) Entgegenhaltungen:
**EP-A- 0 671 358         EP-B- 0 136 309**
**AT-B- 255 339          DE-B- 2 730 883**
**DE-C- 826 437          DE-C- 843 999**
**DE-C- 920 906          DE-C- 2 728 170**
**DE-C- 4 405 800        FR-A- 1 241 406**
**US-A- 3 770 646**

• **PATENT ABSTRACTS OF JAPAN vol. 016, no. 114 (C-0921), 23.März 1992 & JP,A,03 285801 (SEKISUI PLASTICS CO LTD), 17.Dezember 1991,**

• **"Herstellung von reinem Chlordioxid im Laboratorium", UMWELT UND DEGUSSA, DEUTSCHLAND, - 1991, Band, Nr., Seiten 1-4**
• **Internet-Homepage Dr.Küke Gmbh**
• **Sicherheitsdatenblatt Natriumchlorit der Firma Degussa**
• **Sicherheitsdatenblatt Natriumchlorit der Firma Hoechst AG**
• **GMELIN : "Handbuch der anorganischen Chemie, 8.Auflage, Schwefel, Teil B, Seite 827", 1960**
• **Schulze-Rettmer, R., et al. Kernforschungsanlage Jülich, Jül-591-DE, Seite 14, März 1969**
• **STRUCTURE AND STABILITY OF SALTS OF HALOGEN OXYACIDS IN THE SOLID PHASE, SEITE 28, JOHN WILEY AND SONS**
• **HANDBUCH DER ANORGANISCHEN CHEMIE, 1960, 8.AUFLAGE, CHLOR, ERG.B, SYSTEM 6, SEITE 400**
• **W.J. MASSCHELEIN, RIP G. RICE : "Chlorine Dioxide, chemistry and environmental impact of oxychlorine compounds", 1979, ANN ARBORSCIENCE**

Bemerkungen:
Die Akte enthält technische Angaben, die nach dem Eingang der Anmeldung eingereicht wurden und die nicht in dieser Patentschrift enthalten sind.

**Beschreibung**

Wässrige Lösungen von Chlordioxid finden wegen der hohen Oxidationskraft des Chlordioxid häufige Verwendung in der Wasseraufbereitungstechnik. Das Anwendungsgebiet erstreckt sich dabei von der Desinfektion von Trink- und Badewässern bis zur Aufbereitung von Brauch- und Abwässern. Gegenüber den klassischen oxidierenden Desinfektionsmitteln Chlor und Hypochlorit zeichnet sich Chlordioxid in der Anwendung durch eine hervorragende Ökobilanz aus. So werden beim Einsatz von Chlordioxid nur geringe Mengen von AOX ("Adsorbierbare organische Halogenverbindungen"; Summenparameter für alle an Aktivkohle adsorbierbaren Chlor-, Brom- und Jod-Verbindungen unterschiedlichsten Gefährdungspotentials) und nahezu keine Trihalomethane (THM, Haloforme) gebildet.

Es ist z.B. aus der DE-A-843 999 sowie aus der Schritt Umwelt und Degussa, Produkte, Verfahren, Methoden # 2.3" bekannt, zur Herstellung von Chlordioxid von einem Chlorit, beispielsweise Natriumchlorit, auszugehen und dieses mit einem Oxidationsmittel, beispielsweise Natriumperoxodisulfat, in wässriger Lösung nach der Summengleichung

$$2NaClO_2 + Na_2S_2O_8 \rightarrow 2ClO_2 + 2Na_2SO_4$$

zu Chlordioxid aufzuoxidieren. Damit sich eine möglichst hohe Reaktionsgeschwindigkeit ergibt, wird die Reaktionslösung bei dem Verfahren gemäß der DE-A-843999, ggfs. mit Hilfe eines Puffers, auf einen pH-Wert von 5 - 9 eingestellt, enthält das Oxidationsmittel im stöchiometrischen überschuß und kann zur weiteren Beschleunigung der Umsetzung auf bis zu 65° C erhitzt werden. Das sich bildende Chlordioxid wird laufend durch Inertgaseinleitung aus der Reaktionslösung ausgetrieben und in einem Absorptionsturm aufgefangen.

Dieses bekannte Verfahren ergibt zwar bei guten Ausbeuten, bezogen auf das eingesetzte Chlorit, ein Chlordioxid von sehr hoher Reinheit, ist aber in seiner Anwendbarkeit stark beschränkt und - sowohl wegen des hohen apparativen Aufwandes für die Separierung des Chlordioxids als auch wegen der hohen Explosionsgefahr des gasförmigen Chlordioxids - kaum zur großtechnische Anwendung "vor Ort" geeignet. Andererseits scheidet aber auch die Möglichkeit, auf die Separierung des Chlordioxids zu verzichten und die umgesetzte Reaktionslösung als solche zur Desinfektion zu verwenden, für viele Anwendungsfälle, beispielsweise für die Trinkwasserbehandlung aus, weil diese Lösung noch zuviel restliches Chlorit enthält und außerdem durch giftiges, als Nebenprodukt gebildetes Chlorat verunreinigt ist.

Die Erfindung hat zum Ziel, das aus der DE-A-843999 bekannte Verfahren nach Art einer "One Pot"-Reaktion so auszugestalten, daß die umgesetzte, das Chlordioxid enthaltende Reaktionslösung unmittelbar als solche zur Desinfektion eingesetzt werden kann und beispielsweise direkt zur Trinkwasserbehandlung geeignet ist.

Es war eine weitere Aufgabe der vorliegenden Erfindung, ein entsprechendes Verfahren zur Wasseraufbereitung anzugeben (ein Verfahren zur Wasseraufbereitung ist bereits aus der AT-B-255889 bekannt).

Dieses Ziel wird erfindungsgemäß durch die Verfahren gemäß den Ansprüches 1 und 2 sowie das Verfahren gemäß Anspruch 10 erreicht. Eine wässrige Reaktionslösung aus Chlorit und halogenfreiem Oxidationsmittel, welche das Oxidationsmittel bis zum zweifachen der stöchiometrisch erforderlichen Menge enthält und auf einen pH-Wert zwischen 5,5 und 9,5 eingestellt ist, wird hergestellt und bei Raumtemperatur solange umgesetzt, bis das Chlorit zumindest nahezu vollständig zu Chlordioxid umgesetzt ist.

Der Erfindung liegt die Erkenntnis zugrunde, daß es durch konsequente Reaktionsführung möglich ist, die Reaktionslösung zu einer Chlordioxidhaltigen Produktlösung umzusetzen, welche praktisch kein restliches Chlorit (im Idealfall gar kein Chlorit) mehr enthält und auch frei von Chlorat und anderen unerwünschten Nebenprodukten ist. überraschend wurde gefunden, daß dies durch Zusammenwirken mehrerer Faktoren gelingt, nämlich

- möglichst unverzügliche Einstellung des pH-Wertes der Lösung auf einen pH-Wert von 5,5 bis 9,5, vorzugsweise 6 bis 9,
- Oxidationsmittel-Überschuß im molaren Verhältnis von Chlorit zu Oxidationsmittel zwischen 1 und 2, vorzugsweise zwischen 1,75 und 2,
- ausreichend lange Reaktionszeit bei Raumtemperatur.

Handelsübliche Chlorit-Lösungen sind aus Gründen der Lagerstabilität hochalkalisch eingestellt, mit der Folge, daß die Reaktionslösung ohne zusätzliche Maßnahmen (zumindest in einer längeren Anfangsphase) einen pH-Wert von etwa 12 besitzt. Bei einem derartig hohen pH-Wert ist eine Disproportionierung des sich bildenden Chlordioxids in Chlorit und Chlorat unvermeidlich. Es wurde nun gefunden, daß bei pH-Werten unterhalb von 9,5 die Disproportionierungs-Tendenz des Chlordioxids verschwindet, aber die Stabilität der Chlorit-Lösung jedenfalls für die Dauer der Oxidationsreaktion ausreichend gewährleistet bleibt. Erst bei pH-Werten unterhalb von 5,5 ist keine hinreichende Stabilität der Chlorit-Lösung mehr gegeben. Somit wird die Reaktionslösung möglichst rasch in einen pH-Wert-Bereich gebracht, in dem sowohl das Edukt (Chlorit) als auch das Produkt (Chlordioxid) stabil sind und die Oxidationsreaktion ohne störende Nebenreaktionen (weder als Zersetzung des Edukts Chlorit noch als Zersetzung des Produkts Chlordioxid) ablaufen kann. Höhere Temperaturen, die eine Chlorat-Bildung begünstigen, werden vermieden und ausreichend Oxidationsmittel wird zur Verfügung gestellt. Damit bildet sich nahezu kein Chlorat im Reaktionsgemisch, und das eingesetzte Chlorit wird nahezu quantitativ ins Chlordioxid überführt.

Zur Herstellung des wässrigen Reaktionsgemischs wird zweckmäßig eine Chloritlösung mit einer Lösung des Oxidationsmittels gemischt, wobei die für den Erfolg des Verfahrens wichtige rasche Einstellung des pH-Wertes dieses Gemischs mit Hilfe eines - zweckmäßig in gelöster Form vorliegenden - Protonendonators erfolgt, der den pH-Wert der Mischung absenkt. Dieser Protonendonator kann während des Mischvorganges den beiden Reaktanten zudosiert werden, ist aber in einer bevorzugten Ausführungsform der Erfindung in der Lösung des Oxidationsmittels enthalten. Ein besonderer Vorteil der Erfindung ist es dabei, daß einem Anwender ein aus zwei Komponenten bestehendes Reaktionsgebinde zur Verfügung gestellt werden kann und der Anwender diese Komponenten nur noch in einem vorgegebenen Verhältnis zu vermischen braucht, um sich selbst jederzeit bei Bedarf eine frische chloratfreie Chlordioxid-Lösung herzustellen. Gegebenenfalls kann die das Oxidationsmittel und den Protonendonator enthaltende Komponente dabei auch in fester Form geliefert und vom Anwender in Lösung gebracht werden, was sich insbesondere dann anbietet, wenn die Lösung des Oxidationsmittels für sich nicht ausreichend lagerstabil gehalten werden kann, und was außerdem die Versandkosten verringert. Im Prinzip kann auch die Chloritlösung vom Anwender durch Auflösen von festem (mit Natriumchlorid stabilisierten) Natriumchlorit selbst hergestellt werden, was aber weniger zweckmäßig ist, weil festes Nariumchlorit den Vorschriften über Gefahrguttransporte unterliegt.

Die Konzentration des Chlorits und dementsprechend des Oxidationsmittels in der Reaktionslösung hat keinen Einfluß auf den Verfahrensverlauf. Allzu hohe Konzentrationen sollten jedoch vermieden werden, damit sich in der umgesetzten Lösung keine unzulässig hohe Konzentration an Chlordioxid ausbildet.

Als Oxidationsmittel werden Peroxodisulfate bevorzugt, aber andere halogenfreie Oxidationsmittel, wie Permanganate, Fentons Reagenz oder Ozon können Verwendung finden. Das Oxidationsmittel soll im wässrigen Reaktionsgemisch nach Art und Menge zur vollständigen Oxidation des Chlorits ausreichend sein und im stöchiometrischen Überschuß vorliegen. Es wird dann bei der Chlordioxid-Bildungsreaktion nicht vollständig verbraucht. Dies kann in vielen Anwendungsfällen günstig sein, insbesondere um Chlordioxid, das während des Einsatzes der Chlordioxid-Lösung z.B. durch in dem behandelten Wasser enthaltene organische Verunreinigungen reduziert wurde, mit dem überschüssigen Oxidationsmittel in situ zu reoxidieren, wodurch sich die Gesamtwirkung der Desinfektions- oder Aufbereitungslösung verbessert. Dies ist ein besonderer Zusatz-Vorteil der Erfindung, der bei dem bekannten Verfahren nicht zum Tragen kommt.

Als Protonendonator kommen für die Zwecke der Erfindung alle mit dem Oxidationsmittel und mit dem Chlorit verträglichen Substanzen in Betracht, die den pH-Wert des Reaktionsgemisches durch Abgabe von aciden Protonen abzusenken vermögen. Typische Beispiele sind Natriumhydrogensulfat, Natriumdihydrogenphosphat und saure Salze wie Eisen (III)-Chlorid oder Aluminiumchlorid.

Im weiteren Verfolg des Erfindungsgedankens ist es zweckmäßig, der wässrigen Chloritlösung oder der wässrigen Oxidationsmittellösung eine Puffersubstanz zuzusetzen, die im Reaktionsgemisch ein zwischen pH 5,5 und pH 9,5 wirksames Puffersystem ausbildet. Dadurch ergibt sich eine zusätzliche Stabilisierung des eingestellten pH-Wertes.

Unter dem Begriff "Puffersubstanz" werden hier alle Verbindungen verstanden, die durch Abgabe oder Aufnahme eines oder mehrerer Protonen die konjugierte Säure oder Base eines wirksamen Puffersystems bilden können, wobei das wirksame Puffersystem nicht mehr die Puffersubstanz selbst umfassen muß. Die Puffersubstanz reagiert im Reaktionsgemisch basisch, wenn sie in der Chloritlösung vorgelegt ist, und sauer, wenn sie in der Lösung des Oxidationsmittels vorgelegt ist. Ein Beispiel einer für die Zwecke der Erfindung gut geeigneten, in der Chloritlösung enthaltenen Puffersubstanz ist Natriumcarbonat, bei dem das Anion ($CO_3^{2-}$) unter Aufnahme eines bzw. zweier Protonen Hydrogencarbonat bzw. Kohlensäure bildet, also die konjugierte Base bzw. Säure eines Hydrogencarbonat/Kohlensäure-Puffers. Ein Beispiel für eine Puffersubstanz, die der Lösung des Oxidationsmittels zugesetzt werden kann, ist Natriumdihydrogenphosphat, das in dem Reaktionsgemisch einen Hydrogenphosphat/Dihydrogenphosphat-Puffer ausbildet. Auch andere Puffersysteme sind geeignet, sofern sie ein in dem erforderlichen pH-Bereich wirksames Puffersystem ausbilden und z.B. im Trinkwasser unbedenklich sind.

Eine besonders schnelle und vor allem eine vollständig quantitative Umsetzung des Chlorits zu Chlordioxid wird überrraschenderweise erreicht, wenn in die Reaktionslösung zumindest katalytische Mengen von Ionen eines Übergangsmetalls eingebracht werden, vorzugsweise in Form von Silbersalzen, aber auch in Form von Eisensalzen, Mangansalzen oder (sofern für die anschließende Verwendung der Chlordioxid-Lösung tolerierbar) Kupfersalzen. Die Ursache dieser Wirkung wird momentan noch nicht genau verstanden, vermutlich greifen diese Ionen direkt in den Redox-Reaktionsmechanismus ein. Sie können dem Reaktionsgemisch im Prinzip zu jedem beliebigen Zeitpunkt zugesetzt werden, sich also beispielsweise auch bereits in der wäßrigen Chlorit- oder Oxidationsmittellösung befinden. Eine spätere Zugabe der Ionen ist aber ebenso möglich. Gegebenenfalls begleitend entstehende Fällungsprodukte (z.B. AgCl o. dgl.) im Reaktions- oder Produktgemisch, die sich durch eine Trübung bemerkbar machen können, lassen sich nach Erreichen eines ausreichenden Umsatzgrades auf übliche Weise abtrennen.

Die Erfindung wird nachfolgend anhand von Ausführungsbeispielen erläutert.

**Beispiel 1**

**Herstellung einer wässrigen, Chlordioxidhaltigen Lösung**

16,45 Gramm einer handelsüblichen wässrigen Natriumchlorit-Lösung mit einem Gehalt von 300 Gramm Natriumchlorit pro Liter Lösung (z.B. Degussa-Natriumchlorit 300 W) werden mit Wasser auf 900 ml verdünnt. 2 Gramm Natriumcarbonat werden zu dieser verdünnten Natriumchlorit-Lösung gegeben und darin aufgelöst. Die resultierende Lösung (Eduktlösung 1) besitzt einen pH-Wert von ca. 12.

5,33 Gramm Peroxidisulfat und 2,15 Gramm Natriumhydrogensulfat werden in 100 ml Wasser aufgelöst. Der pH-Wert der resultierenden Lösung (Eduktlösung 2) beträgt ca. 2.

Eduktlösung 2 wird zu Eduktlösung 1 hinzugegeben und mit dieser vermischt. Innerhalb einer Minute stellt sich ein pH-Wert von 7,5 ein. Dieser pH-Wert wird durch den entstehenden Netriumcarbonet/Kohlensäure-Puffer stabilisiert. Im wässrigen Reaktionsgemisch entwickelt sich gemäß

$$2 \, ClO_2^- + S_2O_8^{2-} \rightarrow 2 \, ClO_2 + 2 \, SO_4^{2-}$$

Chlordioxid.

Da keines der Edukte der angegebenen Reaktionsgleichung im Überschuß vorliegt, bedarf es zu ihrem vollständigen Umsatz ca. 12 Stunden. Nach der Reaktion liegen ca. 3 Gramm Chlordioxid pro Liter Lösung vor.

**Beispiel 2**

**Herstellung einer wässrigen, Chlordioxidhaltigen Lösung**

Durchführung wie in Beispiel 1, jedoch werden zur Herstellung der Eduktlösung 1 5,04 g eines 80 Gew. % Natriumchlorit und 20 Gew.% Natriumchlorid enthaltenden Feststoffgemenges zunächst mit 2 g Natriumcarbonat und danach mit Wasser versetzt, bis das Gesamtvolumen 900 ml beträgt. Das Feststoffgemenge und das Natriumcarbonat lösen sich im Wasser auf, wobei sich in der resultierenden Lösung (Eduktlösung 1) ein pH-Wert von ca. 12 einstellt.

**Beispiel 3**

**Katalytische Beschleunigung der Umsetzung**

Zum Vergleich wurde eine wässrige Chlordioxidhaltige Lösung zum einen in Abwesenheit (a) und zum anderen in Anwesenheit (b) von $Ag^+$-Ionen hergestellt.

a) 2,81 g $NaHSO_4$ und 9,5 g $Na_2S_2O_8$ werden in 100 ml Wasser gelöst, wobei sich ein pH von ca. 2 einstellt. Die erhaltene Lösung wird mit 900 ml einer alkalischen Lösung (pH 12) versetzt, welche 3 g $ClO_2^-$ und 2 g $Na_2CO_3$ enthält. In wenigen Sekunden stellt sich im Reaktionsgemisch ein pH zwischen 7 und 8 ein.

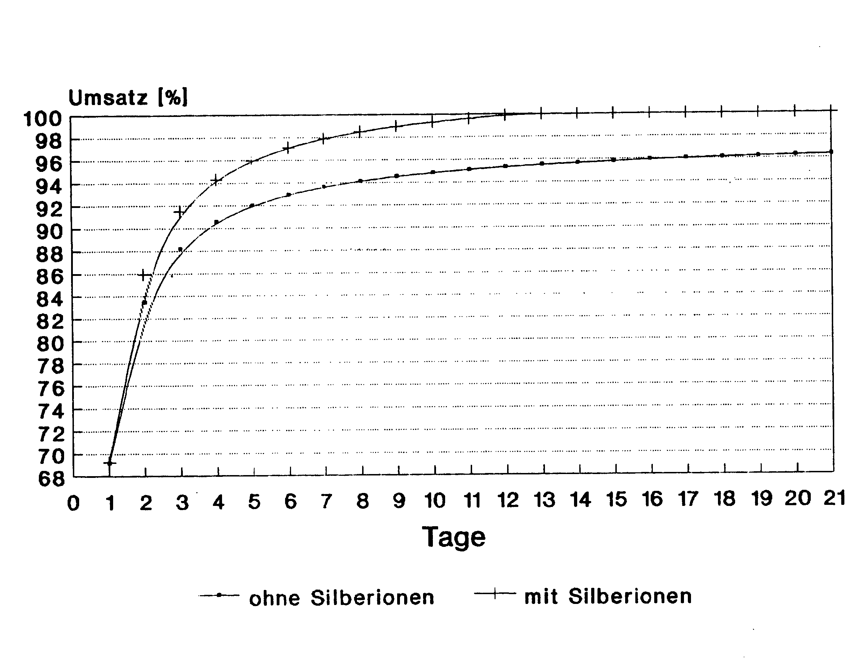

Nach 12 Tagen ist ein Umsatzgrad von 95%, bezogen auf das Chlorit, erreicht. Zur Umsatzentwicklung vgl. die nachfolgende Fig. 1.

b) Durchführung wie unter (a), jedoch werden zu dem Reaktionsgemisch sofort 35 mg $AgNO_3$ gegeben.

Nach 12 Tagen beträgt der Umsatzgrad 99,8%, bezogen auf das Chlorit. Zur Umsatzentwicklung vgl. die nachfolgende Fig. 1.

**Patentansprüche**

1. Verfahren zur Herstellung einer Chlordioxid enthaltenden, unmittelbar zur Wasseraufbereitung einsetzbaren Lösung, mit folgenden Schritten:

   - Herstellen eines wässrigen Reaktionsgemischs, das Chlorit und ein halogenfreies Oxidationsmittel enthält, wobei das Oxidationsmittel im Reaktionsgemisch in einer Menge enthalten ist, die zwischen dem ein- und zweifachen der stöchiometrisch zur Oxidation des Chlorits zu Chlordioxid erforderlichen Menge liegt,
   - rasches Einstellen eines pH-Werts zwischen 5,5 und 9,5 im wässrigen Reaktionsgemisch,
   - Umsetzen des Reaktionsgemisches bei Raumtemperatur zu einer chlordioxidhaltigen Produktlösung, bis das Chlorit zumindest nahezu vollständig zu Chlordioxid umgesetzt ist,

   **dadurch gekennzeichnet, daß**

   - das gebildete Chlordioxid bis zur zumindest nahezu vollständigen Umsetzung der Reaktionsgemisches im Reaktionsgemisch vorliegt.

2. Verfahren zur Herstellung einer Chlordioxid enthaltenden, unmittelbar zur Wasseraufbereitung einsetzbaren Lösung, mit folgenden Schritten:

   - Herstellen eines wässrigen Reaktionsgemischs, das Chlorit und ein halogenfreies Oxidationsmittel enthält, wobei das Oxidationsmittel im Reaktionsgemisch in einer Menge enthalten ist, die zwischen dem ein- und zweifachen der stöchiometrisch zur Oxidation des Chlorits zu Chlordioxid erforderlichen Menge liegt,
- rasches Einstellen eines pH-Werts zwischen 5,5 und 9,5 im wässrigen Reaktionsgemisch,
- Umsetzen des Reaktionsgemisches bei Raumtemperatur,

**dadurch gekennzeichnet, daß**

- die Umsetzung des Reaktionsgemisches durchgeführt wird, bis zumindest nahezu die gesamte eingesetzte Menge an Chlorit im Reaktionsgemisch als Chlordioxid vorliegt.

3. Verfahren nach Anspruch 1 oder 2, wobei

- zur Herstellung des wäßrigen Reaktionsgemischs eine wässrige Lösung des Chlorits mit einem pH-Wert oberhalb 9,5 und eine wässrige Lösung des Oxidationsmittels miteinander versetzt werden und
- die Oxidationsmittellösung zur Einstellung des pH-Werts zwischen 5,5 und 9,5 einen Protonendonator enthält.

4. Verfahren nach einem der Ansprüche 1-3, **dadurch gekennzeichnet, daß** im wässrigen Reaktionsgemisch ein pH-Wert zwischen 6 und 9 eingestellt wird.

5. Verfahren nach einem der vorangehenden Ansprüche, **dadurch gekennzeichnet, daß** Natriumperoxodisulfat als Oxidationsmittel eingesetzt wird und das molare Verhältnis von Chlorit zu Peroxodisulfat auf einen Wert zwischen 1 und 2, vorzugsweise zwischen 1,75 und 2 eingestellt wird.

6. Verfahren nach Anspruch 3, **dadurch gekennzeichnet, daß** die wässrige Chloritlösung oder die wässrige Oxidationsmittellösung eine Puffersubstanz umfaßt, die in der Reaktionslösung ein zwischen pH 5,5 und pH 9,5 wirksames Puffersystem ausbildet.

7. Verfahren nach Anspruch 6, **dadurch gekennzeichnet,** daß die wässrige Chloritlösung Natriumcarbonat als Puffersubstanz enthält.

8. Verfahren nach Anspruch 6, **dadurch gekennzeichnet,** daß die wässrige Oxidationsmittellösung Natriumdihydrogenphosphat als Puffersubstanz enthält.

9. Verfahren nach einem der vorangehenden Ansprüche, **dadurch gekennzeichnet, daß** das Reaktionsgemisch eine katalytisch wirksame Menge an Ionen eines übergangsmetalls, vorzugsweise Silberionen oder Kupferionen enthält.

10. Verfahren zur Wasseraufbereitung mit folgenden Schritten:

- Herstellen eines wässrigen Reaktionsgemischs, das Chlorit und ein halogenfreies Oxidationsmittel enthält, wobei das Oxidationsmittel im Reaktionsgemisch in einer Menge enthalten ist, die zwischen dem ein- und zweifachen der stöchiometrisch zur Oxidation des Chlorits zu Chlordioxid erforderlichen Menge liegt,
- rasches Einstellen eines pH-Werts zwischen 5,5 und 9,5 im wässrigen Reaktionsgemisch,
- Umsetzen des Reaktionsgemisches bei Raumtemperatur, wobei das gebildete Chlordioxid bis zur zumindest nahezu vollständigen Umsetzung der Reaktionsgemisches im Reaktionsgemisch vorliegt,
- Versetzen des Chlardioxid enthaltenden Reaktionsgemischs mit einem aufzubereitenden Trink-, Bade-, Brauch- oder Abwasser.

11. Verfahren nach Anspruch 10, **dadurch gekennzeichnet, daß** das Reaktionsgemisch eine katalytisch wirksame Menge an Ionen eines übergangsmetalls, vorzugsweise Silberionen oder Kupferionen enthält.

## Claims

1. Process for preparing a chlorine-dioxide-containing solution which is useable directly for water treatment, having the following steps:

- preparation of an aqueous reaction mixture which comprises chlorite and a halogen-free oxidizing agent, the oxidizing agent being present in the reaction mixture in an amount which is between once and twice the stoichiometrically required amount for oxidizing the chlorite to chlorine dioxide,
- rapid setting of a pH between 5.5 and 9.5 in the aqueous reaction mixture,
- reacting the reaction mixture at room temperature to form a chlorine-dioxide-containing product solution until the chlorite has been converted at least virtually completely into chlorine dioxide,

**characterized in that**

- the chlorine dioxide formed is present in the reaction mixture up to at least virtually complete reaction of the reaction mixture.

2. Process for preparing a chlorine-dioxide-containing solution which is useable directly for water treatment, having the following steps:

- preparation of an aqueous reaction mixture which comprises chlorite and a halogen-free oxidizing agent, the oxidizing agent being present in the reaction mixture in an amount which is between once and twice the stoichiometrically required amount for oxidizing the chlorite to chlorine dioxide,
- rapid setting of a pH between 5.5 and 9.5 in the aqueous reaction mixture,
- reacting the reaction mixture at room temperature,

**characterized in that**

- the reaction mixture is reacted until at least virtually all of the amount of chlorite used is present in the reaction mixture as chlorine dioxide.

3. Process according to Claim 1 or 2 in which

- to prepare the aqueous reaction mixture an aqueous solution of the chlorite having a pH above 9.5 and an aqueous solution of the oxidizing agent are added to one another and
- the oxidizing agent solution comprises a proton donor to set the pH between 5.5 and 9.5.

4. Process according to one of Claims 1-3, **characterized in that** a pH between 6 and 9 is set in the aqueous reaction mixture.

5. Process according to one of the preceding claims, **characterized in that** sodium peroxodisulphate is used as oxidizing agent and the molar ratio of chlorite to peroxodisulphate is set to a value between 1 and 2, preferably between 1.75 and 2.

6. Process according to Claim 3, **characterized in that** the aqueous chlorite solution or the aqueous oxidizing agent solution comprises a buffer substance which forms a buffer system acting in the reaction solution between pH 5.5 and pH 9.5.

7. Process according to Claim 6, **characterized in that** the aqueous chlorite solution comprises sodium carbonate as buffer substance.

8. Process according to Claim 6, **characterized in that** the aqueous oxidizing agent solution comprises sodium dihydrogen phosphate as buffer substance.

9. Process according to one of the preceding claims, **characterized in that** the reaction mixture comprises a catalytically active amount of ions of a transition metal, preferably silver ions or copper ions.

10. Process for water treatment having the following steps:

- preparation of an aqueous reaction mixture which comprises chlorite and a halogen-free oxidizing agent, the oxidizing agent being present in the reaction mixture in an amount which is between once and twice the stoichiometrically required amount for oxidizing the chlorite to chlorine dioxide,
- rapid setting of a pH between 5.5 and 9.5 in the aqueous reaction mixture,
- reacting the reaction mixture at room temperature, the chlorine dioxide formed being present in the reaction mixture up to at least virtually complete reaction of the reaction mixture,
- adding a drinking water, bathing water, utility water or wastewater to be treated to the chlorine-dioxide-containing reaction mixture.

11. Process according to Claim 10, **characterized in that** the reaction mixture comprises a catalytically active amount of ions of a transition metal, preferably silver ions or copper ions.

**Revendications**

1. Procédé de fabrication d'une solution contenant du dioxyde de chlore utilisable directement dans le traitement de l'eau, comprenant les étapes suivantes :

fabrication d'un mélange réactif aqueux qui contient du chlorite et un agent oxydant sans halogène, l'agent oxydant étant contenu dans 1e mélange réactif en une quantité située entre une fois et deux fois la quantité nécessaire en proportions stoechiométriques à l'oxydation du chlorite pour 1e transformer en dioxyde de chlore,
ajustement rapide du pH entre 5,5 et 9,5 dans le mélange réactif aqueux,
transformation du mélange réactif à température ambiante en un produit de solution contenant du dioxyde de chlore, jusqu'à ce que le chlorite soit au moins presque totalement transformé en dioxyde de chlore,

**caractérisé en ce que** le dioxyde de chlore formé est t présent dans le mélange réactif jusqu'à transformation au moins presque totale du mélange réactif.

2. Procédé de fabrication d'une solution contenant du dioxyde de chlore utilisable directement dans le traitement de l'eau, comprenant les étapes suivantes :

fabrication d'un mélange réactif aqueux qui contient d u chlorite et un agent oxydant sans halogène, l'agent oxydant étant contenu dans le mélange réactif en une quantité située entre une fois et deux fois la quantité nécessaire en proportions stoechiométriques à l'oxydation du chlorite pour le transformer en dioxyde de chlore,

ajustement rapide du pH entre 5,5 et 9,5 dans le mélange réactif aqueux.

transformation du mélange réactif à température ambiante,

**caractérisé en ce que** la transformation du mélange réactif s'effectue jusqu'à ce qu'au moins presque la totalité de la quantité de chlorite utilisée soit présente sous forme de dioxyde de chlore dans le mélange réactif.

3. Procédé selon la revendication 1 ou 2, dans lequel

   - une solution aqueuse de chlorite de pH supérieur à 9,5 et une solution aqueuse d'agent oxydant sont mélangées pour la fabrication du mélange réactif aqueux et
   - la solution d'agent oxydant pour l'ajustement du pH entre 5,5 et 9,5 contient un donneur de protons.

4. Procédé selon l'une quelconque des revendications 1 à 3, **caractérisé en ce que** le pH est ajusté dans le mélange réactif aqueux entre les valeurs 6 et 9.

5. Procédé selon l'une quelconque des revendications précédentes, **caractérisé en ce qu'**on utilise comme agent oxydant le peroxodisulfate de sodium et que le rapport molaire du chlorite au peroxodisulfate est ajusté à une valeur entre 1 et 2, de préférence entre 1,75 et 2.

6. Procédé selon la revendication 3, **caractérisé en ce que** la solution de chlorite aqueuse ou la solution aqueuse d'agent oxydant renferme une substance tampon constituant dans le mélange réactif un système de tampon efficace entre pH 5,5 et pH 9,5.

7. Procédé selon la revendication 6, **caractérisé en ce que** la solution aqueuse de chlorite contient du carbonate de sodium à titre de substance tampon.

8. Procédé selon la revendication 6, **caractérisé en ce que** la solution aqueuse d'agent oxydant contient du dihydrogénophoshate de sodium à titre de substance tampon.

9. Procédé selon l'une quelconque des revendications précédentes, **caractérisé en ce que** le mélange réactif contient une quantité efficace au niveau de la catalyse d'ions d'un métal de transition, de préférence d'ions argent ou d'ions cuivre.

10. Procédé de traitement de l'eau, comprenant les étapes suivantes :

    fabrication d'un mélange réactif aqueux, qui contient du chlorite et un agent oxydant sans halogène, l'agent oxydant étant contenu dans le mélange réactif en une quantité située entre une fois et deux fois la quantité nécessaire en proportions stoechiométriques à l'oxydation du chlorite pour le transformer en dioxyde de chlore,

    ajustement rapide du pH entre 5,5 et 9,5 dans le mélange réactif aqueux,

    transformation du mélange réactif à température ambiant le dioxyde de chlore formé étant présent dans le mélange réactif, jusqu'à transformation au moins presque totale du mélange réactif,

    introduction du mélange réactif contenant du dioxyde de chlore dans une eau potable, eau de lessive, eau de consommation ou eau usée à traiter.

11. Procédé selon la revendication 10, **caractérisé en ce que** le mélange réactif contient une quantité efficace au niveau de la catalyse d'ions d'un métal de transition, de préférence d'ions argent ou d'ions cuivre.

Umsatz [%]

Tage

ohne Silberionen      mit Silberionen

EP 0 822 920 B1